# EUROPÄISCHE PATENTANMELDUNG

(11) **EP 4 119 344 A1**
(43) Veröffentlichungstag der Anmeldung: **18.01.2023**
(21) Anmeldenummer: 21185504.4
(22) Anmeldetag: 14.07.2021
(51) Int. Cl.: B32B 27/08, B32B 27/36

(54) **SPEZIELLE POLYMERSCHICHTEN ZUR SCHNELLEREN LAMINIERBARKEIT VON MEHRSCHICHTAUFBAUTEN**

(71) Anmelder: Covestro Deutschland AG, 51373 Leverkusen (DE)
(72) Erfinder: Pudleiner, Heinz, 47800 Krefeld (DE); Tziovaras, Georgios, 41464 Neuss (DE); Hovestadt, Wieland, 42799 Leichlingen (DE); Janke, Stefan, 41379 Brüggen (DE); Planken, Kira, 47574 Goch (DE)
(74) Vertreter: Levpat

(57) **Zusammenfassung**

Die Erfindung betrifft einen Mehrschichtaufbau (MA), umfassend
(S1) wenigstens eine erste Polymerschicht (S1), die zu ≥ 95 Gew.-%, bevorzugt zu ≥ 98 Gew.-%, besonders bevorzugt zu ≥ 99 Gew.-%, bezogen auf das Gesamtgewicht der Polymerschicht (S1) ein Polymer (P1) ausgewählt aus der Gruppe bestehend aus einem Polycarbonat, einem Co-Polycarbonat oder Mischungen hiervon aufweist, das eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h), aufweist;
(S2) wenigstens eine weitere Polymerschicht (S2), die eine Vicat-Erweichungstemperatur < 149°C, bevorzugt ≤ 140°C, mehr bevorzugt ≤ 130°C bestimmt gemäß ISO 306 (50N; 50°/h) aufweist, bevorzugt in einem Bereich von 120 bis 148 °C;
(S3) optional wenigstens eine dritte Polymerschicht (S3), die eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h) aufweist.

Weiterhin betrifft die Erfindung ein Verfahren zur Herstellung eines Mehrschichtaufbaus (MA) sowie ein Sicherheitsdokument umfassend einen erfindungsgemäßen Mehrschichtaufbau.

## Beschreibung

Die Erfindung betrifft einen Mehrschichtaufbau umfassend mindestens zwei Schichten (S1) und (S2) sowie optional weitere Schichten (S3), wobei mindestens eine Außenschicht (S1) oder (S3) ein Polymer (P1) oder (P3) enthält, das eine Vicat-Erweichungstemperatur ≥ 149°C, aufweist. Weiterhin betrifft die Erfindung ein Verfahren zur Herstellung des Mehrschichtaufbaus (MA), die Verwendung des Mehrschichtaufbaus (MA) zur Herstellung von Laminaten oder Sicherheitsdokumenten und das Sicherheitsdokument enthaltend den Mehrschichtaufbau (MA).

Die Lamination von Polymerfolien ist in vielen Anwendungsbereichen interessant. Bei der Lamination von unterschiedlichen Polymerfolien treten immer wieder Probleme von Lufteinschlüssen, Blasenbildungen oder sonstigen Verformungen der Laminate durch unterschiedlichste Gründe auf. So spielt sowohl die Unverträglichkeit der Polymermaterialien dabei eine große Rolle, aber auch die Eigenschaften der verwendeten Polymer. Desweiteren ist es ein großes Bedürfnis bei der Herstellung von Laminaten einerseits ein langlebiges Produkt herzustellen, andererseits flexibel in der Wahl der Materialien zu sein und zudem auch noch möglichst schnell die Lamination durchzuführen. Daher ist es in der Branche ein großes und langanhaltendes Bedürfnis die komplexe Fertigung der Laminate möglichst schnell und effizient zu generieren.

Daher war es eine Aufgabe dieser Erfindung wenigstens eines der genannten Probleme zu minimieren. Weiterhin war es eine Aufgabe der Erfindung eine Kombination von Materialien zu finden und zu verwenden, die es einerseits ermöglichen komplexe Laminate in den Schichtaufbau einzubauen, was insbesondere auch bei Sicherheitsdokumenten relevant ist, und andererseits eine kosteneffiziente und schnelle Herstellung zu ermöglichen.

Überraschenderweise konnte gefunden werden, dass die Merkmalskombination aus Anspruch 1 diese Aufgaben löst.

Ein erster Gegenstand der Erfindung betrifft einen Mehrschichtaufbau (MA), umfassend
(S1) wenigstens eine erste Polymerschicht (S1), die zu ≥ 95 Gew.-%, bevorzugt zu ≥ 98 Gew.-%, besonders bevorzugt zu ≥ 99 Gew.-%, bezogen auf das Gesamtgewicht der Polymerschicht (S1) ein Polymer (P1) ausgewählt aus der Gruppe bestehend aus einem Polycarbonat, einem Co-Polycarbonat oder Mischungen hiervon aufweist, das eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h), aufweist;
(S2) wenigstens eine weitere Polymerschicht (S2), die eine Vicat-Erweichungstemperatur < 149°C, bevorzugt ≤ 140°C, mehr bevorzugt ≤ 130°C bestimmt gemäß ISO 306 (50N; 50°/h) aufweist, bevorzugt in einem Bereich von 120 bis 148 °C;
(S3) optional wenigstens eine dritte Polymerschicht (S3), die eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h) aufweist.

Je nachdem, welches Substrat oder Unterlage mit dem Mehrschichtaufbau (MA) zu einem Laminat verarbeitet werden soll, weist der Mehrschichtaufbau (MA) entweder lediglich die beiden Schichten (S1) und (S2) auf, wobei die Polymerschicht (S1) eine Außenseite des entstehenden Laminats bildet, oder zusätzlich die dritte Polymerschicht (S3). Die Verwendung der dritten Polymerschicht (S3) kann dabei helfen hitzeempfindliche Schichten im Laminat, die sich zwischen Substrat und Mehrschichtaufbau (MA) befinden oder das Substrat selbst vor zu hohen Temperaturen während des Laminationsprozesses zu schützen.

Bevorzugt ist das Polymer (P1) ausgewählt aus der Gruppe bestehend aus aliphatischen oder aromatischen Polycarbonaten oder Co-Polycarbonaten.

Als Poly- oder Co-Polycarbonate eignen sich bevorzugt aromatische Polycarbonate oder Co-Polycarbonate.

Die Polycarbonate oder Co-Polycarbonate können in bekannter Weise linear oder verzweigt sein.

Die Herstellung dieser Polycarbonate oder Co-Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten und Co-Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. In der "Encyclopedia of Polymer Science and Technology", John Wiley & Sons, Inc., von Daniel J. Brunelle, wird in dem Artikel "Polycarbonates" auf den S. 1 bis 33 nicht nur die Herstellung geeigneter Polycarbonate oder Co-Polycarbonate sondern besonders in der Tabelle 3 auf den Seiten 10 bis 13 aromatische Polycarbonate auf Basis von Bisphenolen beschrieben.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ketone, Bis-(hydroxyphenyl)-sulfone, Bis-(hydroxyphenyl)-sulfoxide, sowie deren kernalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Mischungen aus mindestens zwei hiervon.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol oder Mischungen aus mindestens zwei hiervon.

Ganz besonders bevorzugte Dihydroxyarylverbindungen sind 4,4'-Dihydroxydiphenyl und 1,1-Bis-(4-hydroxyphenyl)-3,3,5-trimethyl-cyclohexan.

Es können sowohl eine Dihydroxyarylverbindung unter Bildung von Homopolycarbonaten als auch verschiedene Dihydroxyarylverbindungen unter Bildung von Co-Polycarbonaten verwendet werden. Es können sowohl eine Dihydroxyarylverbindung der Formel (I) oder (Ia) (Formel weiter unten gezeigt) unter Bildung von Homopolycarbonaten als auch mehrere eine Dihydroxyarylverbindungen der Formel (I) und/oder (Ia) unter Bildung von Co-Polycarbonaten verwendet werden. Dabei können die verschiedenen Dihydroxyarylverbindungen sowohl statistisch als auch blockweise miteinander verknüpft sein. Im Falle von Co-Polycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Co-Polycarbonat kann unter Verwendung von 1,1-Bis-(4-hydroxyphenyl)-3,3,5-trimethyl-cyclohexan und Dihydroxyarylverbindungen der Formel (Ia) und (I) hergestellt werden.

Geeignete Kohlensäurederivate können beispielsweise Diarylcarbonate der allgemeinen Formel (II) sein, 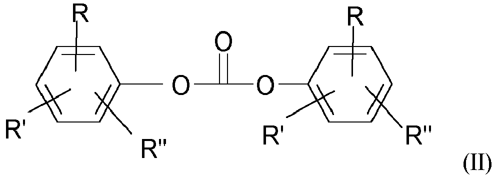 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R'" bedeuten kann, wobei R‴ für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenyl-carbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3 -pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 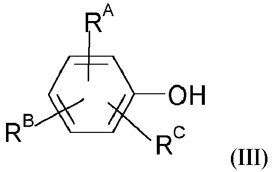 wobei
R^{A} für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Bevorzugte Monohydroxyarylverbindungen sind 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Besonders bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen sein.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Desweitern kann die Polymerschicht (S1) Zusatzstoffe, wie Füllstoffe, Farbstoffe, Pigmente, UV-Stabilisatoren und andere Additive, wie weiter unten auch im Zusammenhang mit der Polymerschicht (S3) ausgeführt, beinhalten.

In einer bevorzugten Ausführungsform des Mehrschichtaufbau (MA) enthält die Polymerschicht (S2) mindestens ein Polymer (P2), ausgewählt aus der Gruppe bestehend aus einem Polycarbonat, einer Mischung oder einem Blend aus einem Polycarbonat und einem Co-Polyester oder Mischungen aus mindestens zwei hiervon.

Geeignete Diphenole können beispielsweise Dihydroxyarylverbindungen der allgemeinen Formel (I) wie bereits für die Diphenole für das Polymer (P1) oben angegeben, sein. Daher wird auf alle Ausführungen zu den Diphenolen an dieser Stelle auf die obigen Ausführungen hierzu verwiesen, die für die Diphenole des Polymer (P2) gleichermaßen gelten.

Es können sowohl eine Dihydroxyarylverbindung unter Bildung von Homopolycarbonaten als auch verschiedene Dihydroxyarylverbindungen unter Bildung von Co-Polycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Co-Polycarbonaten verwendet werden. Dabei können die verschiedenen Dihydroxyarylverbindungen sowohl statistisch als auch blockweise miteinander verknüpft sein. Im Falle von Co-Polycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Zusätzlich zu den für (P1) aufgeführten Beispielen für geeignete Dihydroxyarylverbindungen sind insbesondere zur Bildung von Polymer (P2): Bis-(hydroxyphenyl)-ether, Bis-(hydroxyphenyl)-sulfide, 1,1'-Bis-(hydroxyphenyl)-diisopropylbenzole, 2,2-Bis-(4-hydroxyphenyl)-propan, 2,2-Bis-(3-methyl-4-hydroxyphenyl)-propan, Bis-(4-hydroxyphenyl)-ether, Bis-(4-hydroxyphenyl)-sulfid, besonders bevorzugt 2,2-Bis-(4-hydroxyphenyl)-propan, sowie deren kernalkylierte und kernhalogenierte Verbindungen sowie Mischungen aus mindestens zwei hieraus.

Für geeignete Kohlensäurederivate der allgemeinen Formel (II) sowie die Kettenabbrecher der allgemeinen Formel (III) wird an dieser Stelle ebenfalls auf die Ausführungen mit Bezug zum Polymer (P1) verwiesen, das gleichermaßen für das Polymer (P2) gilt.

Die Polymerschicht (S2) beinhaltet das Polymer (P2) bevorzugt in einem Bereich von 50 bis 100 Gew.-%, mehr bevorzugt in einem Bereich von 70 bis 98 Gew.-%, mehr bevorzugt in einem Bereich von 80 bis 95 Gew.-%, bezogen auf das Gesamtgewicht der Polymerschicht (S2).

Desweitern kann die Polymerschicht (S2) Zusatzstoffe, wie Füllstoffe, Farbstoffe, Pigmente, UV-Stabilisatoren und andere Additive, wie weiter unten ausgeführt, beinhalten.

In einer bevorzugten Ausführungsform des Mehrschichtaufbau (MA) enthält die Polymerschicht (S3) mindestens ein Polymer (P3), ausgewählt aus der Gruppe bestehend aus einem Polycarbonat, einem Co-Polycarbonate und Mischungen aus mindestens zwei hiervon. Das Polymer (P3) ist bevorzugt aus der gleichen Gruppe der Polycarbonate oder Co-Polycarbonate ausgewählt wie das Polymer (P1). Bevorzugt ist das Polymer (P3) das gleiche wie das Polymer (P1).

Für den generellen Aufbau des Polymer (P3) wird auf die Ausführungen, Komponenten und sonstigen Angaben zu dem Polymer (P1) verwiesen, die für das Polymer (P3) gleichermaßen anwendbar sind. Auch, wenn die Komponenten prinzipiell die gleichen sind kann durch Auswahl einiger unterschiedlicher Komponenten das Polymer (P3) anders aufgebaut sein als das Polymer (P1).

Bevorzugt weist die weitere Polymerschicht (S3) das Polymer (P3) in einer Menge in einem Bereich von ≥ 80 bis 100 Gew.-%, bevorzugt in einem Bereich von ≥ 90 bis 99 Gew.-%, besonders bevorzugt von ≥ 95 bis 98 Gew.-%, bezogen auf das Gesamtgewicht der Polymerschicht (S3) auf. Desweitern kann die Polymerschicht (S3) Zusatzstoffe, wie Füllstoffe, Farbstoffe, Pigmente, UV-Stabilisatoren und andere Additive, wie weiter unten ausgeführt, beinhalten.

Bevorzugt weist die Polymerschicht (S3) die gleiche Zusammensetzung an Polymeren auf wie die Polymerschicht (S1). Bevorzugt ist das Polymer (P3) identisch zu dem Polymer (P1). Bevorzugt ist die Polymerschicht (S3) identisch zu der Polymerschicht (S1).

Die Polymerschicht (S3) wird bevorzugt dann eingesetzt, wenn das Substrat auf das der Mehrschichtaufbau (MA) auflaminiert werden soll ein Polymer enthält, dass mit der Polymerzusammensetzung des Polymer (P3) einen ähnlichen Schmelzpunkt aufweist.

In einer bevorzugten Ausführungsform des Mehrschichtaufbau (MA) ist das Polymer (P1) oder das Polymer (P3) ein Polycarbonat oder Co-Polycarbonat der Formel (Ia), (1-2), (1-3) oder (1-4), wobei (Ia) 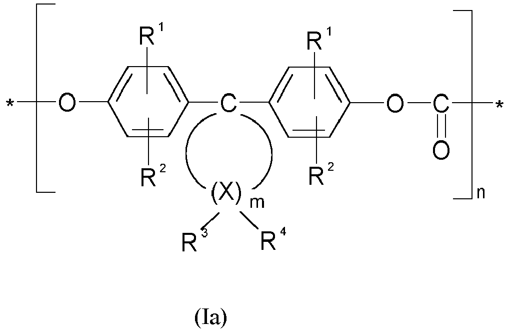 worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆-Alkyl und
- X: Kohlenstoff bedeuten,
mit der Maßgabe, dass an mindestens einem Atom X, R³ und R⁴ gleichzeitig Alkyl bedeuten, oder 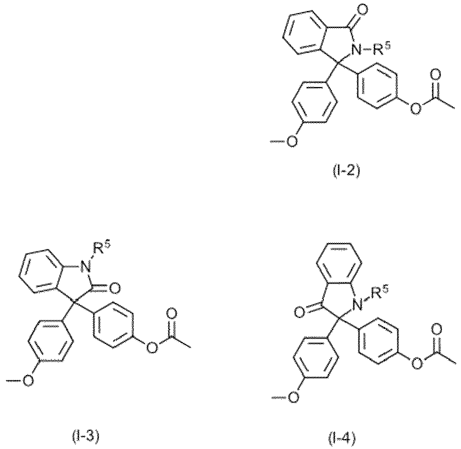 worin R⁵ für einen C₁- bis C₄-Alkylrest, Aralkylrest oder Arylrest, bevorzugt für einen Methylrest oder Phenylrest, ganz besonders bevorzugt für einen Methylrest, steht.

Vorzugsweise weist das eine oder mehrere Polycarbonat oder Co-Polycarbonat auf Basis von Diphenolen der Polymerschicht (S1) oder (S3) ein M_{w} (Gewichtsmittel des Molekulargewichts, ermittelt durch Size Exclustion Chromatographie (SCE) nach vorheriger Eichung mit Polycarbonat-Eichsubstanzen) von mindestens 10.000 g/mol, vorzugsweise von 15.000 g/mol bis 300.000 g/mol, besonders bevorzugt 17.000 bis 36.000 g/mol, ganz besonders bevorzugt 17.000 bis 34.000 g/mol. auf. Die Polymere (P1) oder (P3) können linear oder verzweigt sein, sie können Homopolycarbonate oder Co-Polycarbonate sein.

Bevorzugt umfasst das mindestens ein Polycarbonat oder Co-Polycarbonat auf Basis von Diphenolen mindestens des Polymer (P1) oder Polymer (P3) eine Carbonatstruktureinheit der Formel (I-1).

Die Herstellung dieser Polycarbonate oder Co-Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf H. Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. In der "Encyclopedia of Polymer Science and Technology", John Wiley & Sons, Inc., von Daniel J. Brunelle, wird in dem Artikel "Polycarbonates" auf den S. 1 bis 33 nicht nur die Herstellung geeigneter Polycarbonate oder Co-Polycarbonate sondern besonders in der Tabelle 3 auf den Seiten 10 bis 13 aromatische Polycarbonate auf Basis von Bisphenolen beschrieben.

Ausgangsprodukte für die Realisierung von Polycarbonatstruktureinheiten gemäß Formel (I-1) sind Dihydroxydiphenylcycloalkane der Formel (I-1a) 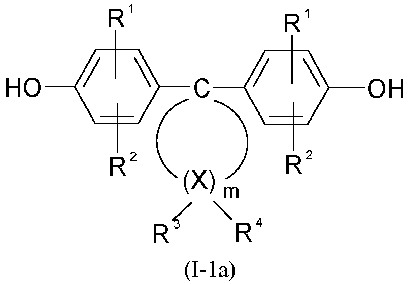 worin
X, R¹, R², R³, R⁴ und m die für die Formel (I-1) genannte Bedeutung haben.

Ausgangsprodukte für die Realisierung von Polycarbonatstruktureinheiten gemäß Formel (1-2), (1-3) und/oder (1-4) sind Dihydroxydiphenylcycloalkane der Formel (I-2a), (I-3a) und/oder (I-4a) 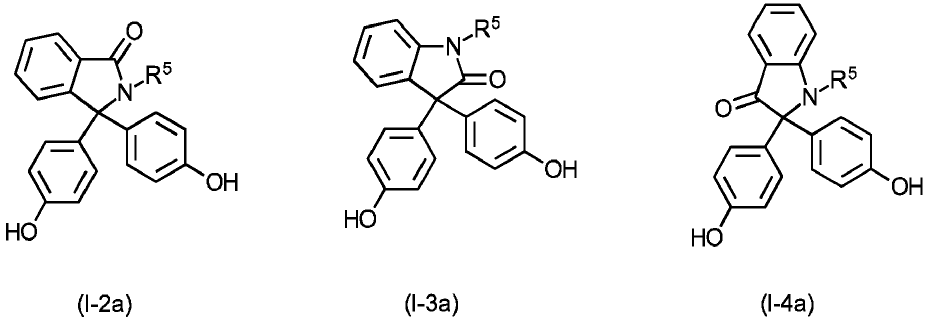 worin R⁵ für einen C₁- bis C₄-Alkylrest, Aralkylrest oder Arylrest, bevorzugt für einen Methylrest oder Phenylrest, ganz besonders bevorzugt für einen Methylrest, steht.

Vorzugsweise sind in Formel (I-1a) die Reste R¹ und R² Wasserstoff.

Bevorzugt sind in Formel (I-1a) an 1-2 Atomen X, insbesondere nur an einem Atom X, R³ und R⁴ gleichzeitig Alkyl.

Bevorzugter Alkylrest in Formel (I-1a) für R³, R⁴ ist Methyl; die X-Atome in alpha-Stellung zu dem Diphenylsubstituierten C-Atom (C-1) sind bevorzugt nicht dialkylsubstituiert, und mindestens ein X-Atom in beta -Stellung zu C-1 ist bevorzugt Alkyl disubstituiert.

In einer bevorzugten Ausführungsform des Mehrschichtaufbau (MA) ist das Polycarbonat oder das Co-Polycarbonat teilweise aus den Ausgangsprodukten hergestellt, ausgewählt aus der Gruppe bestehend aus: 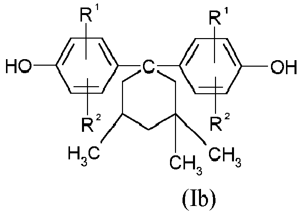 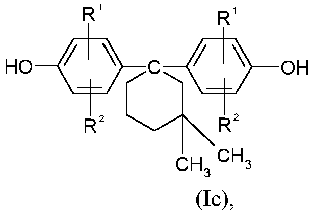 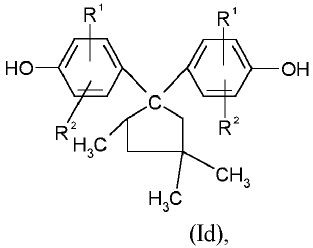 oder Mischungen aus mindestens zwei hiervon.

Bevorzugt sind in Formel (I-1a) Dihydroxydiphenylcycloalkane mit 5 und 6 Ring-C-Atomen im cycloaliphatischen Rest (m = 4 oder 5 in Formel (I-1a)), beispielsweise die Diphenole der Formeln (I-1b) bis (I-1d), wobei das 1,1-Bis-(4-hydroxyphenyl)-3,3,5-trimethylcyclohexan (Formel (I-1b) mit R¹ und R² gleich H) besonders bevorzugt ist. Die Polycarbonate können gemäß der EP 0359953 A1 aus Diphenolen der Formel (I-1a) hergestellt werden.

Es können sowohl ein Diphenol der Formel (I-1a) unter Bildung von Homopolycarbonaten als auch mehrere Diphenole der Formel (I-1a) unter Bildung von Co-Polycarbonaten verwendet werden.

Wenigstens eine der Polymerschichten (S1), (S2) und/oder (S3) des Mehrschichtaufbaus (MA) kann zudem wenigstens einen Füllstoff aufweisen. Bei dem Füllstoff handelt es sich bevorzugt um wenigstens ein Farbpigment und/oder wenigstens einen sonstigen Füllstoff zur Erzeugung einer Transluzenz der gefüllten Schichten, besonders bevorzugt um ein Weißpigment, ganz besonders bevorzugt um Titandioxid, Zirkoniumdioxid oder Bariumsulfat, in einer bevorzugten Ausführungsform um Titandioxid.

Das Füllen wenigstens einer Polymerschicht (S1), (S2) oder (S3) des Mehrschichtaufbaus (MA) mit wenigstens einem solchen Füllstoff kann die Sichtbarkeit der eingebrachten Beschriftung bzw. Abbildungen, wodurch die Wahrnehmung der verbesserten Schärfe und Auflösung weiter erhöht wird, verbessern.

Die genannten Füllstoffe werden vorzugsweise in Mengen von 2 bis 45 Gew.-%, besonders bevorzugt von 5 bis 30 Gew.-%, bezogen auf das Gesamtgewicht der jeweiligen Polymerschicht (S1), (S2) oder (S3), die den Füllstoff enthält, welche zum Beispiel durch Extrusion oder Coextrusion erfolgen kann, zugegeben. Insbesondere sind dies die Polymerschichten (S2) oder weniger bevorzugt (S3). Die Polymerschicht (S1) beinhaltet bevorzugt 0 bis 1 Gew.-%, mehr bevorzugt 0,01 bis 0,5 Gew.-%, besonders bevorzugt 0,05 bis 0,1 Gew.-% eines Füllstoffes aus der Liste wie zuvor erwähnt, bezogen auf das Gesamtgewicht der Polymerschicht (S1).

Bevorzugt sind die Polymerschichten (S1), (S2) und (S3) frei von Füllstoffen.

Der erfindungsgemäße Mehrschichtaufbau (MA) umfassend wenigstens eine Polymerschicht (S1) und eine weitere Polymerschicht (S2) und gegebenenfalls eine dritte Polymerschicht (S3) kann beispielsweise und bevorzugt mittels Coextrusion der enthaltenen Schichten, Lamination der enthaltenen Schichten oder Extrusionslamination, d.h. Aufextrudieren der Schicht(en) enthaltend wenigstens eine erste Polymerschicht (S1) und eine weitere Polymerschicht (S2) und gegebenenfalls eine dritte Polymerschicht (S3) hergestellt werden. Bevorzugt sind die Varianten der Coextrusion und des Aufextrudierens. Ganz besonders bevorzugt ist die Herstellung des Mehrschichtaufbaus (MA) mittels Coextrusion mindestens der Polymerschichten (S1) und (S2) und ggf. (S3).

Bevorzugt ist demnach ein coextrudierter Mehrschichtaufbau (MA) umfassend wenigstens eine weitere Polymerschicht (S2) enthaltend mindestens einen Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Co-Polycarbonat(en), dadurch gekennzeichnet, dass der Anteil an Poly- oder Co-Polycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-% ganz besonders bevorzugt in einem Bereich von ≥ 60 Gew.-% bis ≤ 75 Gew.-% liegt, und dass das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweisen. wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Co-Polycarbonat(en), dadurch gekennzeichnet, dass der Anteil an Poly- oder Co-Polycarbonat(en) in diesem Blend in einem Bereich von ≥ 50 Gew.-% und bis ≤ 90 Gew.-%, vorzugsweisen einem Bereich von ≥ 60 Gew.-% und bis ≤ 80 Gew.-% ganz besonders bevorzugt in einem Bereich von ≥ 60 Gew.-% bis ≤ 70 Gew.-% liegt, und dass das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von 30 bis 80 mol-%, vorzugsweise in einem Bereich von 30 bis 75 mol-% und besonders bevorzugt in einem Bereich von 32 bis 68 mol-% bezogen auf die Diolkomponente, aufweisen, und eine erste Polymerschicht (S1), wobei diese erste Polymerschicht (S1) ein oder mehrere Poly- oder Copolycondensat(e) einer aromatischen und/oder Cycloalkyl-Dicarbonsäure und aliphatischen, cycloaliphatischen und/oder araliphatischen Diolen mit 2 bis 16 Kohlenstoffatomen enthält.

Optional enthält der coextrudierte Mehrschichtaufbau (MA) eine dritte Polymerschicht (S3), wobei diese dritte Polymerschicht ein oder mehrere Poly-oder Copolycondensat(e) einer aromatischen und/oder Cycloalkyl-Dicarbonsäure und aliphatischen, cycloaliphatischen und/oder araliphatischen Diolen mit 2 bis 16 Kohlenstoffatomen umfasst und die Schichten so angeordnet sind, dass die beiden Polymerschichten (S1) und (S3) die äußeren Schichten des coextrudierten Mehrschichtaufbaus (MA) bilden.

Die erfindungsgemäße Mehrschichtaufbau (MA), egal ob extrudiert oder laminiert eignet sich hervorragend als Bestandteil für Sicherheitsdokumente, bevorzugt Identifikationsdokumente und/oder Bankkarten. Insbesondere eignet sich der Mehrschichtaufbau (MA) für die Beschriftung mittels Lasergravur. Bei Verwendung des Mehrschichtaufbau (MA) erreicht man eine hohe Schärfe und eine hohe Qualität der mittels Lasergravur aufgebrachten Elemente. Mittels Lasergravur lassen sich vorzugsweise personalisierende Schriftzüge und/oder Abbildungen in eine der Polymerschichten (S1), (S2) oder (S3) einbringen. Ganz besonders bevorzugt eignet sich der Mehrschichtaufbau (MA) für Identifikationsdokumente in Form verklebter oder laminierter Schichtverbunde in Form von Kunststoffkarten, wie z.B. Personalausweisen, Reisepässen, Führerscheinen, Kreditkarten, Bankkarten, Karten für die Zugangskontrolle oder sonstigen Ausweisdokumenten etc.. Bevorzugte Identifikationsdokumente sind im Rahmen der vorliegenden Erfindung mehrschichtige flächenförmige Dokumente mit Sicherheitsmerkmalen wie Chips, Fotografien, biometrischen Daten etc. Diese Sicherheitsmerkmale können von außen sichtbar oder zumindest abfragbar sein. Vorzugsweise hat ein solches Identifikationsdokument eine Größe zwischen der einer Scheckkarte und der eines Reisepasses. Ein solches Identifikationsdokument kann auch Teil eines Dokumentes aus mehreren Teilen sein, wie z.B. ein Identifikationsdokument aus Kunststoff in einem Reisepass, der auch Papier- oder Pappanteile enthält.

Der Mehrschichtaufbau (MA) zeigt eine gute Haftung der einzelnen Polymerschichten in Schichtaufbauten wie beispielsweise in Sicherheitsdokumenten bei hoher Auflösung, Klarheit, Transparenz, Planlage und geringem Verzug selbst bei hohen Laminationstemperaturen.

Weiterhin weiset der Mehrschichtaufbau (MA) insbesondere als Bestandteil in Sicherheitsdokumenten, bevorzugt Identifikationsdokumenten und/oder Bankkarten eine sehr gute Chemikalienbeständigkeit, insbesondere gegen Aceton und künstlichem Hautfett auf. Die Haltbarkeit von Sicherheitsdokumenten, in denen der Mehrschichtaufbau (MA) enthalten ist, ist im Vergleich zu herkömmlichen Karten besser, was sich in der Zusammenschau aller erwähnter Parameter zeigt.

In einer bevorzugten Ausführungsform des Mehrschichtaufbau (MA) beinhaltet das Polycarbonat oder das Co-Polycarbonat die Ausgangsverbindung (Ib) in einem Bereich von 10 Gew.-% bis 90 Gew.-%, bevorzugt in einem Bereich von 15 bis 85 Gew.-%, bezogen auf das Gesamtgewicht des Polycarbonats oder des Co-Polycarbonats oder weist das Polycarbonat oder das Co-Polycarbonat ein molares Verhältnis von (Ib) zu anderen Bisphenol A Abkömmlingen in einem Bereich von 1:10 bis 10:1, bevorzugt in einem Bereich von 1:5 bis 5:1 auf.

In einer bevorzugten Ausführungsform des Mehrschichtaufbau (MA) weist der komplette Mehrschichtaufbau (MA) mindestens eine, bevorzugt mindestens zwei, besonders bevorzugt alle der folgenden Eigenschaften auf:
(A) eine Dicke in einem Bereich von 30 bis 500 µm, bevorzugt in einem Bereich von 40 bis 400 µm, besonders bevorzugt in einem Bereich von 45 bis 200 µm, ganz besonders bevorzugt in einem Bereich von 50 bis 100 µm;
(B) eine Planlage in einem Bereich von 5 bis 40 mm, bevorzugt in einem Bereich von 10 bis 30 mm für einen 500 mm ^{∗} 600 mm großen Schichtaufbaus;
(C) eine vertikale Abweichung der Dicke des Mehrschichtaufbaus (MA) in einem Bereich von ≥ 0,002 bis ≤ 0,020 mm, weiter bevorzugt in einem Bereich von ≥ 0,003 bis ≤ 0,015 mm, am meisten bevorzugt in einem Bereich von ≥ 0,005 bis ≤ 0,01 mm über die gesamte Fläche des Mehrschichtaufbaus (MA);
(D) eine Schichtdickentoleranz von 4 bis 20%, weiter bevorzugt von 5 bis 15%, besonders bevorzugt von 6 bis 10%, bezogen auf die nominale Schichtdicke des Mehrschichtaufbaus (MA);
(E) eine Hitzebeständigkeit bis zu einer Temperatur von 350°C, mehr bevorzugt bis zu 380°C;
(F) eine Transparenz in einem Bereich von 20 bis 98%, bevorzugt von 50 bis 95%, besonders bevorzugt von 60 bis 90%, gemessen gemäß ISO 13468-2:2006-07;

Bevorzugt weist der Mehrschichtaufbau (MA) mindestens eine, bevorzugt eine Kombination an Eigenschaften ausgewählt aus der Gruppe bestehend aus (A); (B); (C); (D); (E); (F); (A) und (B); (A) und (C); (A) und (D); (A) und (E); (A) und (F); (B) und (C); (B) und (D); (B) und (E); (B) und (F); (C) und (D); (C) und (E); (C) und (F); (D) und (E); (D) und (F); (E) und (F); (A) und (B) und (C); (A) und (B) und (D); (A) und (B) und (E); (A) und (B) und (F); (A) und (C) und (D); (A) und (C) und (E); (A) und (C) und (F); (A) und (D) und (E); (A) und (D) und (F); (A) und (E) und (F); (B) und (C) und (D); (B) und (C) und (E); (B) und (C) und (F); (B) und (D) und (E); (B) und (D) und (F); (B) und (E) und (F); (C) und (D) und (E); (C) und (D) und (F); (C) und (E) und (F); (D) und (E) und (F); (A) und (B) und (C) und (D); (A) und (B) und (C) und (E); (A) und (B) und (C) und (F); (A) und (B) und (D) und (E); (A) und (B) und (D) und (F); (A) und (B) und (E) und (F); (A) und (C) und (D) und (E); (A) und (C) und (D) und (F); (A) und (C) und (E) und (F); (A) und (D) und (E) und (F); (B) und (C) und (D) und (E); (B) und (C) und (D) und (F); (B) und (C) und (E) und (F); (A) und (B) und (C) und (D) und (E); (A) und (B) und (C) und (D) und (F); (A) und (B) und (C) und (E) und (F); (A) und (B) und (D) und (E) und (F); (A) und (C) und (D) und (E) und (F); (B) und (C) und (D) und (E) und (F); (A) und (B) und (C) und (D) und (E) und (F).

Die Planlage unter Eigenschaft (B) erwähnt, kann durch Messung der Höhenabweichung eines 500 ^{∗}600 mm großen Stück des Mehrschichtaufbaus (MA) mit Hilfe eines Lineals erfolgen, wenn das Stück auf eine ebene Fläche wie ein Tisch gelegt wird. Bevorzugt wird die Planlage sowohl auf beiden Seiten des planen Mehrschichtaufbaus (MA) ermittelt.

Bevorzugt weist eine der Polymerschichten (S1) oder (S3) mindestens eine, bevorzugt beide der folgenden Eigenschaften auf:
(G) eine Dicke in einem Bereich von 5 bis 100 µm, bevorzugt in einem Bereich von 6 bis 50 µm, besonders bevorzugt in einem Bereich von 7 bis 40 µm, ganz besonders bevorzugt in einem Bereich von 10 bis 30 µm;
(H) eine Transparenz in einem Bereich von 20 bis 98%, bevorzugt von 50 bis 95%, besonders bevorzugt von 60 bis 90%, gemessen gemäß ISO 13468-2:2006-07.

Bevorzugt weist die Polymerschicht (S2) mindestens eine, bevorzugt beide der folgenden Eigenschaften auf:
(I) eine Dicke in einem Bereich von 20 bis 100 µm, bevorzugt in einem Bereich von 25 bis 90 µm, besonders bevorzugt in einem Bereich von 30 bis 80 µm, ganz besonders bevorzugt in einem Bereich von 40 bis 70 µm.
(J) eine Transparenz in einem Bereich von 20 bis 98%, bevorzugt von 50 bis 95%, besonders bevorzugt von 60 bis 90%, gemessen gemäß ISO 13468-2:2006-07.

Bevorzugt weist eine der Polymerschichten (S1), (S2), (S3) oder (S4), besonders bevorzugt die Polymerschicht (S2), ein lasersensitives Additiv, vorzugsweise ein Schwarzpigment, besonders bevorzugt Ruß, enthalten. Die Polymerschicht, die das lasersensitive Additiv enthält, lässt sich gut mittels Lasergravur personalisieren.

Die Beschriftung von Kunststoff-Folien mittels Lasergravur wird in der Fachwelt und auch im Folgenden kurz als Laserbeschriftung bezeichnet. Demnach ist im Folgenden unter dem Begriff "laserbeschriftet" mittels Lasergravur beschriftet zu verstehen. Das Verfahren der Lasergravur ist dem Fachmann bekannt und nicht zu verwechseln mit dem Bedrucken mittels Laserdruckern.

Als lasersensible Additive kommen beispielsweise sogenannte Laser-Markier-Additive in Frage, d.h. solche aus einem Absorber im Wellenlängenbereich des zu verwendenden Lasers, bevorzugt im Wellenlängenbereich von ND:YAG-Lasern (Neodym-dotierte Yttrium-Aluminium-Granat-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs^{™} kommerziell angeboten. Weiterhin als lasersensible Additive geeignete Absorber sind Ruß, sowie phosphorhaltige Zinn-Kupfer-Mischoxide wie z.B. in WO-A 2006/042714 beschrieben.

Das lasersensitives Additiv kann in den Polymerschichten (S1) und/oder (S2) und/oder (S3) in einer Menge von 0,5 bis 180 ppm, vorzugsweise von 1 bis 160 ppm, besonders bevorzugt 5 bis 120 ppm enthalten sein. Im Rahmen der Erfindung sind unter ppm Gew.-ppm zu verstehen, sofern nichts anderes angegeben wird.

Bevorzugt ist es, wenn die Korngröße des lasersensiblen Additivs im Bereich von 100 nm bis 10 µm liegt, und besonders vorteilhaft, wenn sie im Bereich von 50 nm bis 2 µm liegt.

Der optionale Zusatz von lasersensitiven Additiven, vorzugsweise Schwarzpigmenten, besonders bevorzugt Ruß in den Polymerschichten (S1) und/oder (S2) und/oder (S3) beeinträchtigen die Transparenz des Mehrschichtaufbaus (MA) nicht.

Ein weiterer Gegenstand der Erfindung betrifft ein Verfahren zur Herstellung eines Mehrschichtaufbaus (MA) mit einer ersten Außenseite (AS1) und einer der Außenseite (AS1) gegenüberliegenden zweiten Außenseite (AS2), umfassend die Schritte
i) Bereitstellen mindestens einer ersten Polymerschicht (S1);
ii) Bereitstellen mindestens einer weiteren Polymerschicht (S2);
iii) Optional Bereitstellen mindestens einer dritten Polymerschicht (S3);
iv) Bilden eines Laminats aus jeweils einer separaten Polymerschicht (S1), (S2) und optional (S3) bei einer Temperatur (T1) von ≥ 150°C, bevorzugt ≥ 180°C, mehr bevorzugt ≥ 200°C, ganz besonders bevorzugt ≥ 210°C;
wobei mindestens eine der Außenseiten (AS 1) oder (AS2) durch eine der Polymerschichten (S1) oder (S3) gebildet werden, die jeweils ein Polymer (P1) oder (P2) beinhalten oder daraus bestehen, die jeweils eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h), aufweisen.

Das Bereitstellen der Polymerschichten (S1), (S2) und optional (S3) in den Schritten i), ii) und optional iii) kann auf jede Weise erfolgen, die der Fachmann für eine Lamination zur Herstellung des Mehrschichtaufbaus (MA) auswählen würde. Bevorzugt findet das Bereitstellen in einer kontinuierlichen Laminationsanlage statt.

Bevorzugt ist die Abfolge der Schichten (S1) bis (S3) vor Schritt iv) ausgewählt aus der Gruppe bestehend aus:
- einer ersten Polymerschicht (S1) als Außenseite (AS1) gefolgt von einer weiteren Polymerschicht (S2);
- einer ersten Polymerschicht (S1) als Außenseite (AS1) gefolgt von zwei gleichen weiteren Polymerschichten (S2);
- einer ersten Polymerschicht (S1) als Außenseite (AS1) gefolgt von zwei unterschiedlichen weiteren Polymerschichten (S2);
- einer ersten Polymerschicht (S1) als Außenseite (AS1) gefolgt von mindestens einer weiteren Polymerschicht (S2) gefolgt von einer dritten Polymerschicht (S3);
- einer ersten Polymerschicht (S1) als Außenseite (AS1) gefolgt von mindestens einer weiteren Polymerschicht (S2) gefolgt von einer ersten Polymerschicht (S1);
und Kombinationen aus mindestens zwei hiervon.

Das Bilden des Laminats in Schritt iv) kann auf jede Art und Weise erfolgen, die der Fachmann für eine Lamination bei einer Temperatur (T1) von mindestens 150°C und bevorzugt maximal 300°C auswählen würde. Bevorzugt findet die Lamination in Form einer Rollenlamination statt bei der die aus den Schritten i) bis iii) bereitgestellten Polymerschichten über mindesten zwei gegenüberliegenden Walzen oder Rollen, auch Walzenpaar genannt, geführt werden. Von den mindestens zwei Walzen oder Rollen ist mindestens eine auf eine Temperatur (T1) aufgeheizt. Bevorzugt findet die Rollenlamination über zwei hintereinandergeschaltete Walzenpaaren statt, wovon jede der 4 Walzen einzeln beheizbar ist. Zwischen und/oder hinter den Walzenpaaren befindet sich bevorzugt jeweils eine Kühlstation, die eine Temperatur deutlich unterhalb von (T1) gekühlt wird. Bevorzugt werden die Kühlstationen auf eine Temperatur in einem Bereich von 10 bis 100°C, bevorzugt von 15 bis 80°C, besonders bevorzugt von 20 bis 50°C gebracht. Mit den beheizten Walzen oder Rollen tritt dann die Polymerschicht (S1) in Kontakt, die sich auf der Außenseite (AS1) befindet. Je nachdem welche Polymerschicht die zweite Außenschicht (AS2) bildet, kann die zweite Walze oder Rolle ebenfalls beheizt sein, weniger beheizt sein als die erste Walze oder Rolle oder gar nicht beheizt sein. Weist die zweite Walze oder Rolle ebenfalls eine Temperatur (T2) auf die oberhalb von 150°C liegt so ist die Polymerschicht, die die Außenseite (AS2) bildet ausgewählt aus einer Polymerschicht (S1) oder (S3).

Bevorzugt ist die Auflagefläche der Walzen auf den Außenseiten (AS1) und (AS2) 1 bis 100 mm, bevorzugt 2 bis 50 mm, besonders bevorzugt 3 bis 20 mm.

Alle Eigenschaften, Zusammensetzungen, Dimensionen und Ausgestaltungen des erfindungsgemäßen Mehrschichtaufbaus (MA) sind auch im Zusammenhang mit dem Verfahren zur Herstellung des Mehrschichtaufbaus (MA) anwendbar und werden zur Vermeidung von Wiederholungen hier nicht noch mal erwähnt.

In einer bevorzugten Ausführungsform des Verfahrens beträgt der Wärmeeintrag in die jeweilige Polymerschicht (S1), (S2) oder (S3) in Schritt iv) ≥ 50 J/s^{∗}m², bevorzugt ≥ 60 J/s^{∗}m², besonders bevorzugt ≥ 80 J/s^{∗}m², diese Angabe ist in Joule (J)/Sekunde (s) ^{∗} Quadratmeter (m²) gemacht.

In einer bevorzugten Ausführungsform des Verfahrens erfolgt der Eintrag der Wärme auf die jeweilige Polymerschicht( S1), (S2) oder (S3) in Schritt iv) zur Erreichung der Temperatur (T1) ausgehend von 23°C innerhalb von ≤ 15 Sekunden, bevorzugt von ≤ 10 Sekunden, mehr bevorzugt von ≤ 5 Sekunden.

In einer bevorzugten Ausführungsform des Verfahrens beinhaltet die Polymerschicht (S1) oder die Polymerschicht mindestens ein Polymer (P1) oder (P3) ausgewählt aus der Gruppe bestehend aus einem Polycarbonat, einem Co-Polycarbonaten oder einer Mischung von mindestens zwei hiervon.

In einer bevorzugten Ausführungsform des Verfahrens enthält die Polymerschicht (S2) mindestens ein Polymer (P2), ausgewählt aus der Gruppe bestehend aus einem Polycarbonat, eine Mischung oder einem Blend aus einem Polycarbonat und einem Co-Polyester oder einer Mischung aus mindestens zwei hiervon.

Ein weiterer Gegenstand der Erfindung betrifft ein Laminat, insbesondere ein Sicherheitsdokument, enthaltend einen erfindungsgemäßen Mehrschichtaufbau (MA) oder einen nach dem erfindungsgemäßen Verfahren erhältlichen Mehrschichtaufbau (MA).

Alle Eigenschaften, Zusammensetzungen, Dimensionen und Ausgestaltungen des erfindungsgemäßen Mehrschichtaufbaus (MA) ) oder dessen Herstellungsverfahrens sind auch im Zusammenhang mit dem Sicherheitsdokument anwendbar und werden zur Vermeidung von Wiederholungen hier nicht noch mal erwähnt.

Bevorzugt handelt es sich bei dem Sicherheitsdokument um ein Identifikationsdokument, wie einer ID-Karten oder einem Reisepass, und/oder eine Bankkarte enthaltend wenigstens einen Mehrschichtaufbau (MA).

Das erfindungsgemäße Sicherheitsdokument, bevorzugt Identifikationsdokument kann weitere zusätzliche Schichten, beispielsweise mindestens eine Polymerschicht (S4), aufweisen, über die beispielsweise weitere Informationen in das Sicherheitsdokument, bevorzugt Identifikationsdokument und/oder Bankkarte eingebracht werden. Bevorzugt weist die Polymerschicht (S4) das Polymere (P2) in einer Menge in einem Bereich von 50 bis 100 Gew.-%, weiter bevorzugt in einem Bereich von 70 bis 98 Gew.-%, besonders bevorzugt in einem Bereich von 80 bis 95 Gew.-%, bezogen auf das Gesamtgewicht der Polymerschicht (S4), auf. Die Polymerschicht (S4) kann ebenfalls Additive, wie bereits für die Polymerschichten (S1) und (S2) aufgeführt, bevorzugt in den gleichen Mengen wie dort angegeben, aufweisen.

Bei solchen weiteren Informationen kann es sich beispielsweise um personalisierende Porträts oder nicht personalisierende allgemeine Informationen handeln, die beispielsweise in jedem gattungsgleichen Sicherheitsdokument, bevorzugt Identifikationsdokument und/oder Bankkarte in gleicher Form enthalten sind.

Solche Schichten können beispielsweise aus vorher mittels herkömmlicher Druckverfahren, vorzugsweise Ink-Jet- oder Laserdruck, besonders bevorzugt Farbdruck mit diesen Informationen bestückten Folien bzw. Polymerschichten in das Sicherheitsdokument, bevorzugt Identifikationsdokument und/oder Bankkarte eingebracht werden.

Mittels Ink-Jet-Druckverfahren bedruckbare Folien bzw. Polymerschichten sind dem Fachmann an sich bekannt und können beispielsweise auch die Polymerschichten (S4) sein. In besonders bevorzugten Ausführungsformen werden zur besseren Sichtbarkeit der aufgedruckten Informationen mittels Füllstoffen wie z.B. Titandioxid, Zirkoniumdioxid, Bariumsulfat etc. weiß oder transluzent eingefärbte Kunststoff-Folien bzw. Polymerschichten (S4) verwendet.

Für mittels Laserdruck, insbesondere mittels Farblaserdruck zu bedruckende Polymerschichten eignen sich insbesondere solche der eingangs beschriebenen erfindungsgemäßen Polymerschichten (S1) oder Polymerschichten (S4), die einen spezifischen Oberflächenwiderstand von 10⁷ bis 10¹³ Ω, bevorzugt von 10⁸ bis 10¹² Ω aufweisen. Der spezifische Oberflächenwiderstand in Ω wird gemäß DIN IEC 60093 (1993) bestimmt.

Dabei kann es sich vorzugsweise um solche Polymerschichten des Typs (S1) handeln, bei denen dem Kunststoff vor der Schichtherstellung zur Erzielung des spezifischen Oberflächenwiderstandes beispielsweise ein Additiv ausgewählt aus tertiären oder quaternären, bevorzugt quaternären Ammonium- oder Phosphoniumsalzen einer teil- oder perfluorierten organischen Säure oder quaternären Ammonium- oder Phosphoniumhexafluorophosphaten, bevorzugt einer teil- oder perfluorierten Alkylsulfonsäure, vorzugsweise einer Perfluoralkylsulfonsäure zugegeben wurde. Diese Additive können insbesondere in der Polymerschicht (S1), aber auch in geringem Maße in den Polymerschichten (S2) und/oder (S3) enthalten sein.

Bevorzugte geeignete quarternäre Ammonium- oder Phosphoniumsalze sind:
- Perfluoroctansulfonsäuretetrapropylammoniumsalz,
- Perfluorbutansulfonsäuretetrapropylammoniumsalz,
- Perfluoroctansulfonsäuretetrabutylammoniumsalz,
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Diisopropyldimethylammoniumperfluorbutylsulfonat,
- Diisopropyldimethylammoniumperfluoroctylsulfonat,
- N-Methyl-tributylammoniumperfluoroctylsulfonat
- Cyclohexyldiethylmethylammoniumperfluoroctylsulfonat,
- Cyclohexyltrimethylammoniumperfluoroctylsulfonat,
sowie die entsprechenden Phosphoniumsalze. Bevorzugt sind die Ammoniumsalze.

Bevorzugt können auch ein oder mehrere der vorstehend genannten quartären Ammonium- oder Phosphoniumsalze, also auch Mischungen eingesetzt werden.

Ganz besonders geeignet ist das Perfluoroctansulfonsäuretetrapropylammoniumsalz, das Perfluoroctansulfonsäuretetrabutylammoniumsalz, das Perfluoroctansulfonsäuretetrapentylammoniumsalz, das Perfluoroctansulfonsäuretetrahexylammoniumsalz und das Perfluoroctansulfonsäuredimethyldiisopropylammoniumsalz sowie die entsprechenden Perfluorbutansulfonsäure salze.

Besonders bevorzugt wird das Perfluorbutansulfonsäuredimethyldiisopropylammoniumsalz (Diisopropyldimethylammonium-perfluorbutylsulfonat) als Additiv verwendet.

Die genannten Salze sind bekannt oder können nach bekannten Methoden hergestellt werden. Die Salze der Sulfonsäuren lassen sich beispielsweise durch Zusammengeben äquimolarer Mengen der freien Sulfonsäure mit der Hydroxyform des entsprechenden Kations in Wasser bei Raumtemperatur und Einengen der Lösung darstellen. Andere Herstellungsverfahren sind beschrieben z.B. in DE-A 1 966 931 und NL-A 7 802 830.

Die genannten Salze werden vorzugsweise in Mengen von 0.001 bis 2 Gew.%, bevorzugt von 0.1 bis 1 Gew.%, bezogen auf das Gesamtgewicht der jeweiligen Polymeren (P1), (P2) oder (P3), den Polymeren (P1), (P2) oder (P3) vor der Formgebung zum erfindungsgemäßen Mehrschichtaufbau (MA), welche bevorzugt durch Extrusion oder Coextrusion erfolgen kann, zugegeben.

Ein weiterer Gegenstand der Erfindung betrifft die Verwendung des erfindungsgemäßen Mehrschichtaufbaus (MA) oder des nach dem erfindungsgemäßen Verfahrens hergestellte Mehrschichtaufbaus (MA) für eine Oberflächenbehandlung, insbesondere einer Lamination, die zumindest auf einer Seite des zu laminierenden Mehrschichtaufbaus (MA) bei einer Temperaturen (T1) in einem Bereich von ≥ 160°C bis ≤ 250°C, bevorzugt in einem Bereich ≥ 170°C bis ≤ 240°C; mehr bevorzugt in einem Bereich von ≥ 180°C bis ≤ 230°C, besonders bevorzugt in einem Bereich von ≥ 185°C bis ≤ 220°C, ganz besonders bevorzugt in einem Bereich von ≥ 190°C bis ≤ 210°C stattfindet. Bevorzugt wird gleichzeitig zu der erhöhten Temperatur ein Druck in einem Bereich von 10 N/cm² bis 400 N/cm², vorzugsweise von 30 N/cm² bis 300 N/cm², besonders bevorzugt von 40 N/cm² bis 250 N/cm² beaufschlagt.

Bei der Verwendung des erfindungsgemäßen Mehrschichtaufbaus (MA) für eine Oberflächenbehandlung, insbesondere für eine Lamination, wird der Mehrschichtaufbau (MA) zunächst bereitgestellt und zusammen mit einem Substrat, beispielsweise einer Polymerschicht (S4), die bevorzugt ein Polymer (S2) beinhaltet, wie es zuvor beschrieben wurde, für eine möglichst niedrige Zeitdauer, bevorzugt für 5 bis 30 Sekunden, bevorzugt 7 bis 20 Sekunden der gewählten Temperatur (T1) und einem erhöhten Druck ausgesetzt. Der Druck liegt bevorzugt in einem Bereich von 10 N/cm² bis 400 N/cm², vorzugsweise von 30 N/cm² bis 300 N/cm², besonders bevorzugt von 40 N/cm² bis 250 N/cm². Da sowohl Temperatur als auch Druck bevorzugt über eine Walze oder Rolle auf die Polymerschichten (S1) bis (S3) und Substrat übertragen werden, erfolgt auch die Druckeinbringung nur für die oben für die Temperaturweinwirkung der gewählten Temperatur (T1) genannten Zeitdauern. Die Einwirkung der erhöhten Temperatur (T1) und des erhöhten Drucks kann auch über mehrere Rollen, beispielsweise 2 bis 4 Rollen erfolgen, die zusammen die genannte Zeitdauer von 5 bis 30 Sekunden, bevorzugt 7 bis 20 Sekunden Kontakt mit dem Mehrschichtaufbau (MA) plus weitere Schichten, wie (S4) haben, um das Laminat herzustellen. Nach dem Laminierprozess wird ein Schichtverbund erhalten, der die zusammenlaminierten Schichten so zusammenhält, dass der Schichtverbund nur durch Zerstörung des Laminats wieder in die Schichten aufgetrennt werden kann bzw. dass die einzelnen Schichten gar nicht mehr voneinander lösbar sind.

Alle Eigenschaften, Zusammensetzungen, Dimensionen und Ausgestaltungen des erfindungsgemäßen Mehrschichtaufbaus (MA) und dessen Herstellprozess sind auch im Zusammenhang mit dessen Verwendung anwendbar.

In einer bevorzugten Ausführungsform der Verwendung wird der erfindungsgemäße Mehrschichtaufbau (MA) zur Herstellung eines Sicherheitsdokuments, bevorzugt eines Identifikationsdokuments verwendet, insbesondere in einem Aufbau wie zuvor hierfür beschrieben.

In dem Sicherheitsdokument können wie bereits erwähnt weitere Sicherheitsmerkmale eingebracht sein. Das so entstandene Sicherheitsdokument, bevorzugt Identifikationsdokument und/oder Bankkarte kann beispielsweise derart hergestellt werden, dass aus den verschiedenen Polymerschichten und Substraten für den Aufbau des Sicherheitsdokuments, bevorzugt Identifikationsdokuments und/oder Bankkarte, ein Schichtstapel zusammengelegt und zu einem Schichtverbund laminiert und anschließend in die geeignete Form des Sicherheitsdokument, bevorzugt Identifikationsdokuments und/oder Bankkarte zugeschnitten wird. Gegebenenfalls können auf dieses Verbundlaminat nachträglich weitere Schichten aufgebracht werden, beispielsweise durch Aufkleben und/oder Auflaminieren weiterer Folien oder Beschichten mittels Lackzusammensetzungen.

Die folgenden Beispiele dienen der exemplarischen Erläuterung der Erfindung und sind nicht als Beschränkung aufzufassen. Im Rahmen der Beschreibung der Polymerschichten (S1) bis (S3) oder des Mehrschichtaufbaus wird auch von Folien als Synonym zu Polymerschichten gesprochen.

### Beispiele

### Eingesetzte Rohstoffe:

**Eastar^{™} DN 010 (DN 010):** Poly- oder Copolykondensat einer Terephthalsäure aus 54,9 Gew.-% Terephthalsäure, 9,3 Gew.-% (38 Mol-% bezogen auf die Diolkomponente) Ethylenglykol und 35,8 Gew.-% (62 Mol-% bezogen auf die Diolkomponente) Cyclohexandimethanol-1,4, mit einer inherenten Viskosität von 0,74 dl/g (gemessen in einer 1:1 Mischung aus Phenol und Tetrachlorethan bei 25°C) der Firma Eastman Chemical Company.

**Pocan^{™} B 1600 (PBT 1600):** Unmodifiziertes Polykondensat der Terephthalsäure und Butandiol-1,4 als Diolkomponente mit einer Melt Volume Rate (MVR) 14 g/10min nach ISO 1133 bei 260°C und 2,16 kg der Firma Lanxess AG.

**Makroion^{™} 3108:** hochviskoses amorphes, thermoplastisches Bisphenol A-Polycarbonat der Firma Covestro AG mit einem MVR 6,5 g/10min nach ISO 1133-1:2011 bei 300°C und 1,2 kg Auflagegewicht und einer Vicat Erweichungstemperatur (VST) nach ISO 306:2004 Methode B120 bei 50 N; 120 °C/h von 150°C und einer Glasübergangstemperatur T_{g} nach ISO 11357-1,-2 von 149°C

**KRONOS^{™} 2230:** Titandioxid der Fa. Kronos für Polycarbonat und andere technische Thermoplaste mit einem TiO₂ Gehalt ≥ 96 %

### Beispiel 1: Hochtemperatur-Polycarbonat PC 1 als Polymer (P1) oder (P3):

149,0 g (0,65 Mol) Bisphenol A (2,2-Bis-(4-hydroxyphenyl)-propan, 107,9 g (0,35 Mol) 1,1-Bis-(4-hydroxyphenyl)-3,3,5-trimethylcyclohexan, 336,6 g (6 Mol KOH und 2700 g Wasser wurden in einer Inertgas-Atmosphäre unter Rühren gelöst. Dann fügte man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wurde 1 ml Ethylpiperidin zugegeben und noch 45 Min. gerührt. Die bisphenolatfreie wässrige Phase wurde abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,255, bestimmt nach DIN EN ISO 1628-1:2009. Die Vicat-Erweichungstemperatur des Polymers wurde nach ISO 306:2004 Methode B120 bei 50 N; 120 °C/h zu 183°C ermittelt.

### Beispiel 2: Hochtemperatur-Polycarbonat PC 2 als Polymer (P1) oder (P3):

Analog zu PC 1 wurde eine Mischung aus 91,6 g (0,40 Mol) Bisphenol A und 185,9 g (0,60 Mol) 1,1-Bis-(4-hydroxyphenyl)-3,3,5-trimethylcyclohexan zum entsprechenden Polycarbonat 2 umgesetzt. Das Polycarbonat zeigte eine relative Lösungsviskosität von 1,251, bestimmt nach DIN EN ISO 1628-1:2009.

Die Vicat-Erweichungstemperatur des Polymers wurde nach ISO 306:2004 Methode B120 bei 50 N; 120 °C/h zu 204°C bestimmt.

### Beispiel 3: Hochtemperatur-Polycarbonat PC 3 als Polymer (P1) oder (P3):

Analog zu PC 1 wurde eine Mischung aus 44,2 g (0,19 Mol) Bisphenol A und 250,4 g (0,81 Mol) 1,1-Bis-(4-hydroxyphenyl)-3,3,5-trimethylcyclohexan zum entsprechenden Polycarbonat umgesetzt.

Das Polycarbonat zeigte eine relative Lösungsviskosität von 1,248, bestimmt nach DIN EN ISO 1628-1:2009.

Die Vicat-Erweichungstemperatur des Polymers (P1) wurde nach ISO 306:2004 Methode B120 bei 50 N; 120 °C/h zu 216°C bestimmt.

### Beispiel 4: Compoundierung eines Batches für die Herstellung einer Polymerschicht (S4) umfassend einen thermoplastischen Kunststoff als Polymer (P2) und ein Weißpigment als Füllstoff:

Die Herstellung der Batches für die Herstellung einer weißen Schicht erfolgte mit einem herkömmlichen Zweischnecken-Compoundierextruder (ZSK 32) bei Verarbeitungstemperaturen von 250 bis 330°C.

Es wurden Batches mit den Zusammensetzungen gemäß Tabelle 1 compoundiert und anschließend granuliert:

**Tabelle 1: Zusammensetzung von Compounds für die Herstellung von Polymerschichten (S4) umfassend thermoplastische Kunststoffe als Polymer (P2)**

| | Polycarbonat | Kronos^{™} 2230 |
|---|---|---|
| Beispiel 4 | 85 Gew.-% Makrolon^{™} 3108 | 15 Gew-% |

### Allgemeine Herstellvorschrift von mono-lagige Extrusions-Folien

Die verwendete Anlage besteht aus
▪ einem Extruder mit einer Schnecke von 105 mm Durchmesser (D) und einer Länge von 41×D. Die Schnecke weist eine Entgasungszone auf;
▪ einem Umlenkkopf;
▪ einer -Breitschlitzdüse mit 1500 mm Breite;
▪ einem Dreiwalzen-Glättkalander mit horizontaler Walzenanordnung, wobei die dritte Walze um +/- 45° gegenüber der Horizontalen schwenkbar ist;
▪ einer Rollenbahn;
▪ einer Einrichtung zum beidseitigen Aufbringen von Schutzfolie;
▪ einer Abzugseinrichtung;
▪ Aufwickelstation.

Das Granulat eines Polymer (P2) wurde dem Fülltrichter des Extruders zugeführt. Im jeweiligen Plastifiziersystem Zylinder/Schnecke erfolgte das Aufschmelzen und Fördern des jeweiligen Materials. Die Materialschmelze wurde der Düse zugeführt. Von der Düse gelangte die Schmelze auf den Glättkalander. Auf dem Glättkalander erfolgte die endgültige Formgebung und Abkühlung des Materials zu einer Polymerschicht (S4), die als Substrat oder Zwischenschicht dienen kann. Zur Strukturierung der Folienoberflächen wurden dabei eine mattierte Stahl-Walze (4-er Oberfläche) und eine mattierte Gummi-Walze (4-er Oberfläche) eingesetzt. Anschließend wurde die Folie oder Schicht (S4) durch einen Abzug transportiert, danach erfolgte die Aufwicklung der Schicht (S4). Auf diese Weise wurden gemäß Tabelle 2 die entsprechenden weiß opaken Extrusionsschichten hergestellt.

**Tabelle 2: Weiß opake mono-lagige Extrusionsfolien**

| | Compound | Folien -Schichtdicke |
|---|---|---|
| Beispiel 5^{∗} | 100% Compound 4 | 100 µm |
| Beispiel 6^{∗} | 100% Compound 4 | 200 µm |

| | | |
|---|---|---|
| * nicht erfindungsgemäß | | |

**Tabelle 3: transparente mono-lagige Extrusionsfolien**

| | Compound | Folien -Schichtdicke |
|---|---|---|
| Beispiel 7^{∗} | 100% Makrolon 3108 | 50 µm |
| Beispiel 7a^{∗} | 100% Makrolon 3108 | 600 µm |

| | | |
|---|---|---|
| * nicht erfindungsgemäß | | |

### Beispiel 8: Compoundierung eines Masterbatches enthaltend ein lasersensibles Additiv

Die Herstellung des Masterbatches der für die Herstellung der laserbaren Polymerschicht(en) eingesetzt wurde, erfolgte mit einem herkömmlichen Zweischnecken-Compoundierextruder (ZSK 32) bei Verarbeitungstemperaturen von 250 bis 330°C.

Es wurde ein Master-Batch mit folgender Zusammensetzung compoundiert und anschließend granuliert:
- 99,994 Gew.-% Polycarbonat Makrolon^{™} 3108
- 0,006 Gew.-% (60 ppm) Vulcan XC 72 101 (Ruß der Fa. Cabot) mit einem mittleren Teilchengröße von 95 nm .

### Allgemeine Herstellungvorschrift von Extrusions- und Coextrusionsfolien

Die verwendete Anlage besteht aus
▪ einem Extruder mit einer Schnecke von 105 mm Durchmesser (D) und einer Länge von 41×D. Die Schnecke weist eine Entgasungszone auf;
▪ einen Coextruder zum Aufbringen der Deckschicht mit einer Schnecke der Länge 25 D und einem Durchmesser von 35 mm
▪ einem Umlenkkopf;
▪ eine speziellen Coextrusions-Breitschlitzdüse mit 1500 mm Breite;
▪ einem Dreiwalzen-Glättkalander mit horizontaler Walzenanordnung, wobei die dritte Walze um +/- 45° gegenüber der Horizontalen schwenkbar ist;
▪ einer Rollenbahn;
▪ einer Einrichtung zum beidseitigen Aufbringen von Schutzfolie;
▪ einer Abzugseinrichtung;
▪ Aufwickelstation.

Das Granulat des Basismaterials wurde dem Fülltrichter des Hauptextruders zugeführt. Im jeweiligen Plastifiziersystem Zylinder/Schnecke erfolgte das Aufschmelzen und Fördern des jeweiligen Materials in Form der Polymere (P1) oder (P2). Beide Materialschmelzen wurden in der Coextrusionsdüse zusammengeführt. Von der Düse gelangte die Schmelze auf den Glättkalander. Auf dem Glättkalander erfolgt die endgültige Formgebung und Abkühlung des Materials. Zur Strukturierung der Folienoberflächen wurden dabei eine strukturierte Metall-Walze (6-er Oberfläche) und eine strukturierte Gummi-Walze (2-er Oberfläche) eingesetzt. Anschließend wurde die Folie durch einen Abzug transportiert, danach erfolgte die Aufwicklung der Folie als erfindungsgemäßer Mehrschichtaufbau (MA).

Die Zusammensetzungen der Folien der Beispiele werden in den Tabellen 4 und 5 beschrieben.

**Tabelle 4: Zusammensetzung der zweischichtigen Co-Extrusionsfolien (Beispiele 9 bis 15)**

| | | Schicht (S2) | Schichtdicke | Schicht (S1) | Schichtdicke |
|---|---|---|---|---|---|
| Beispiel 9 50 µm AB-Coex-Folie, transparent, nicht laserbar | | M.3108 100% | 40 µm | 100% Polymer aus Beispiel 1 | 10 µm |
| Beispiel 10 | | M.3108 100% | 80 µm | 100% Polymer aus Beispiel 1 | 20 µm |
| 100 µm AB-Coex-Folie, transparent, nicht laserbar | | | | | |
| Beispiel 11 50 µm AB-Coex-Folie, transparent, nicht-laserbar | M.3108 | 65% | 40 µm | 100% Polymer aus Beispiel 1 | 10 µm |
| | DN 010 | 25% | | | |
| | PBT 1600 | 10% | | | |
| Beispiel 12 100 µm AB-Coex-Folie, transparent, nicht-laserbar | M.3108 | 65% | 80 µm | 100% Polymer aus Beispiel 1 | 20 µm |
| | DN 010 | 25% | | | |
| | PBT 1600 | 10% | | | |
| Beispiel 13 100 µm AB-Coex-Folie, laserbar | M.3108 | 89% | 80 µm | 100% Polymer aus Beispiel 1 | 20 µm |
| | MB Beispiel 8 | 11% | | | |
| Beispiel 14 50 µm AB-Coex-Folie, laserbar | M.3108 | 89% | 40 µm | 100% Polymer aus Beispiel 2 | 10 µm |
| | MB Beispiel 8 | 11% | | | |
| Beispiel 15 100 µm AB-Coex-Folie, laserbar | M.3108 | 89% | 80 µm | 100% Polymer aus Beispiel 3 | 20 µm |
| | MB Beispiel 8 | 11% | | | |

Zur Herstellung von dreischichtigen Mehrschichtaufbauten (MA) wurde genauso vorgegangen, wie für die zweilagigen Aufbauten beschrieben, mit dem Unterschied, dass die Schmelze des Polymer (P1) in zwei Stränge unterteilt wurde und auf beiden Seiten des Stranges des Polymer (P2) in die Düse geführt wurde, sodass ein Mehrschichtaufbau (MA) mit den Schichten (S1)-(S2)-(S3) erhalten wurde.

**Tabelle 5: Zusammensetzung der dreischichtigen (S1)-(S2)-(S3)-Coextrusionsfolien (Bsp. 17 bis 19)**

| | Schicht (S1) | Dicke [µm] | Schicht (S2) | Dicke [µm] | Schicht (S3) | Dicke [µm] |
|---|---|---|---|---|---|---|
| Beispiel 17 100 µm BAB-Coex-Folie, laserbar | 100 Gew.-% Polymer aus Beispiel 1 | 10 | M.3108 89% MB Beispiel 8 11% | 80 | 100% Polymer aus Beispiel 1 | 10 |
| Beispiel 18 100 µm BAB-Coex-Folie, laserbar | 100 Gew.-% Polymer aus Beispiel 2 | 10 | M.3108 89% MB Beispiel 8 11% | 80 | 100% Polymer aus Beispiel 2 | 10 |
| Beispiel 19 100 µm BAB-Coex-Folie, laserbar | 100 Gew.-% Polymer aus Beispiel 3 | 10 | M.3108 89% MB Beispiel 8 11% | 80 | 100% Polymer aus Beispiel 3 | 10 |

### Herstellung von Identifikationsdokumenten (ID-Karte) durch Rollenlamination (Beispiele 20 bis 31)

Die ID-Dokumente wurden gemäß Schichtaufbau der Tabellen 6 und 7 wie folgt laminiert:
Es wurde aus den Folien jeweils ein Stapel in der genannten Reihenfolge gebildet und die Lamination wurde auf einem Rollenlaminator der Firma Melzer mit folgenden Parametern durchgeführt.

**Tabelle 6: Laminat-Schichtaufbau**

| **Pos.** | **Schichttyp** | **Auswahl** | **Dicke** |
|---|---|---|---|
| **1** | Mehrschichtaufbau (MA) mit Polymerschicht (S1)-(S2)-(S3) der Beispiele 9 bis 19 | | 100 µm |
| **2** | Für Referenz: Folie aus Beispiel 7 als Ersatz für Polymerschicht (S1) | Für Vergleichsbeispiel als Ersatz für Pos. 1 | 100 µm |
| **3** | Beispiel 5 Substrat Polymer (P2) | | 100 µm |
| **4** | Beispiel 6 Substrat Polymer (P3) | | 200 µm |

Der Rollenlaminator weist 2 obere und 2 untere Laminationsbänder des Typs Standard ID 3-Format mit einer Breite von je ca. 120 mm auf. Jedes der Bänder weist zwei Heiz- und einen Kühlbereich (jeder Heizbereich mit 3 Heizelementen und dazwischen ein Kühlbereich mit 6 Kühlelementen) auf und kann separat beheizt bzw. gekühlt werden und kommt mit je einer Außenschicht des Mehrschichtaufbaus plus Substrat in Form der Polymerschicht (S4) in Kontakt. Bevorzugt kommen die beiden oberen Laminationsbänder mit der Polymerschicht (S1) in Kontakt und die beiden unteren mit der Polymerschicht (S4). Die Laminationsbänder weisen je eine Heizeinheit M330 auf und eine Kühleinheit M220. Die beiden oberen Laminationsbänder wurden auf die Temperatur (T1), wie in Tabelle 7 angegeben aufgeheizt. Die beiden unteren Laminationsbänder wurden auf eine niedrigere Temperatur als (T1) aufgeheizt, wie ebenfalls in Tabelle 7 angegeben. Die Kühleinheiten sind jeweils nach einer Heizeinheit angeordnet. Die Verweildauer sind ebenfalls in Tabelle 7 aufgelistet.

Bei der Berechnung der Wärmeströme und Wärmeeinträge in die Polymerschichten (1) oder (2) wurden die bei den Versuchen 20 bis 29 und den Referenzversuchen 1 und 2 angewendeten Durchlaufzeiten von 2 × 8 Sekunden (Beispiele 20 bis 29) bzw. 2 × 14 Sekunden bei der Referenzversuch 1 oder 2 aus Tabelle 7 verwendet. Die Breite und Länge der Heizzonen - also die Flächen (0,12m × 2 m = 0,24 m²) - sind in den Referenzversuchen 1 und 2 sowie in den erfindungsgemäßen Versuchen 20 bis 19 gleich.

Für die Referenzversuche 1 und 2 aus Tabelle 7 wurde ein mittlerer Wärmestrom von 11,47 J/s aufgewendet. Dies entspricht bei einer Kontaktfläche des Laminats mit den Rollen von 0,24 m² einem mittleren Wärmeeintrag auf die obere Seite des jeweiligen Referenzlaminats von 47,8 J/s^{∗}m² (Wärmestrom/Fläche 11,47 J/s : 0,24 m² = 47,8 J/s^{∗}m²).

Für die Versuche 20 bis 29 betrug der mittlere Wärmestrom 52,7 J/s und der daraus berechnete Wärmeeintrag berechnet aus Wärmestrom/Fläche zu 219,6J/s^{∗}m² ( 52,7 J7s : 0,24 m² = 219,6 J/s^{∗}m²).

Für den Wärmeeintrag wurde der Mittelwert verwendet, da ausgehend von einer Ausgangstemperatur von 25°C der Wärmefluss am Anfang sehr hoch ist und bei Annährung an die Kontakttemperaturen von 176°C bis 209°C immer mehr abnimmt.

### Herstellung von Laminaten

**Tabelle 7: Bedingungen zweier Referenzbeispiele und der erfindungsgemäßen Beispiele 20 bis 29**

| Beispiel. | Druck (bar) | | | | Temp. (°C) Station | | | | Zyklusanzahl | Zeit (s) | Karten pro Stunde | Anmerkung |
|---|---|---|---|---|---|---|---|---|---|---|---|---|
| | Kühlen | | Heizen | | Kühlen | | Heizen | | | | | |
| | Anstieg (s) | | Anstieg (s) | | Elemente 7-12 | | Elemente 4-6 | Elemente 1-3 | | | | |
| Referenz 1 (nicht erfindungsgemäß) | 1 | 120 | 1 | 80 | 20 | oben | 185 | | 2 | 14 pro Heizzyklus | 2616 | Folie aus Bsp. 7 schlug Blasen |
| | | | | | 20 | unten | 150 | | | | | |
| | | | | | | | | | | | | |
| Referenz 2 (nicht erfindungsgemäß) | 1 | 120 | 1 | 80 | 20 | oben | 190 | | 2 | 14 pro Heizzyklus | 2616 | Folie aus Bsp. 7 verklebte mit Rolle |
| | | | | | 20 | unten | 150 | | | | | |
| | | | | | | | | | | | | |
| 20 (erfindungsgemäß) | 1 | 120 | 1 | 80 | 20 | oben | 185 | | 2 | 10 pro Heizzyklus | 3442 | Beispiel 9 |
| | | | | | 20 | unten | 150 | | | | | |
| | | | | | | | | | | | | |
| 21 (erfindungsgemäß) | 1 | 120 | 1 | 80 | 20 | oben | 185 | | 2 | 10 pro Heizzyklus | 3442 | Beispiel 10 |
| | | | | | 20 | unten | 150 | | | | | |
| | | | | | | | | | | | | |
| 22 (erfindungsgemäß) | 1 | 120 | 1 | 80 | 20 | oben | 185 | | 2 | 8 pro Heizzyklus | 4100 | Beispiel 11 |
| | | | | | 20 | unten | 150 | | | | | |
| 23 (erfindungsgemäß) | 1 | 120 | 1 | 80 | 20 | oben | **185** | 2 | | 8 pro Heizzyklus | 4100 | Beispiel 12 |
| | | | | | 20 | unten | 150 | | | | | |
| | | | | | | | | | | | | |
| 24 (erfindungsgemäß) | 1 | 120 | 1 | 80 | 20 | oben | **200** | 2 | | 8 pro Heizzyklus | 4100 | Beispiel 13 |
| | | | | | 20 | unten | 150 | | | | | |
| | | | | | | | | | | | | |
| 25 (erfindungsgemäß) | 1 | 120 | 1 | 80 | 20 | oben | **200** | 2 | | 8 pro Heizzyklus | 4100 | Beispiel 14 |
| | | | | | 20 | unten | 150 | | | | | |
| | | | | | | | | | | | | |
| 26 (erfindungsgemäß) | | 120 | 1 | 80 | 20 | oben | **210** | 2 | | 8 pro Heizzyklus | 4100 | Beispiel 15 |
| | | | | | 20 | unten | 150 | | | | | |
| | | | | | | | | | | | | |
| 27 (erfindungsgemäß) | | 120 | 1 | 80 | 20 | oben | **210** | 2 | | 8 pro Heizzyklus | 4100 | Beispiel 17 |
| | | | | | 20 | unten | 150 | | | | | |
| | | | | | | | | | | | | |
| 28 (erfindungsgemäß) | | 120 | 1 | 80 | 20 | oben | **210** | 2 | | 8 pro Heizzyklus | 4100 | Beispiel 18 |
| | | | | | 20 | unten | 150 | | | | | |
| | | | | | | | | | | | | |
| 29 (erfindungsgemäß) | | 120 | 1 | 80 | 20 | oben | **220** | 2 | | 8 pro Heizzyklus | 4100 | Beispiel 19 |
| | | | | | 20 | unten | 150 | | | | | |

Aufgrund der höheren Temperatur (T1), die auf der Seite der Polymerschicht (S1) verwendet werden kann, ohne dass diese soweit aufschmilzt, dass sie morphologische Veränderungen zeigt, im Gegensatz zu den herkömmlichen Polymerschichten wie für die Referenzversuche gezeigt, konnte eine deutlich erhöhte Durchsatzzahl erreicht werden. So konnte die Stückzahl von 2616 pro Stunde mit herkömmlichem Material auf 4100 pro Stunde erhöht werden. Dies wäre noch steigerungsfähig, wenn die Geschwindigkeit der Laminationsbänder weiter erhöht werden könnte. So wurde bereits mit einer Temperatur (T1) von 200°C die auf der Anlage mögliche Maximalstückzahl von 4100 Stück /Stunde erreicht, wobei das Material auch bei 220 °C noch keinerlei Strukturveränderung, beispielsweise in Form von Blasen zeigte. Alle Laminate mit den erfindungsgemäßen Mehrschichtaufbau (MA) konnten ohne Haftkraftverlust sehr viel schneller als die Referenz-Folie laminiert werden. Die Laminationszeit konnte halbiert werden, so dass die Produktivität der Rollenlaminationslinie verdoppelt werden konnte.

## Patentansprüche

1. Ein Mehrschichtaufbau (MA), umfassend
(S1) wenigstens eine erste Polymerschicht (S1), die zu ≥ 95 Gew.-%, bevorzugt zu ≥ 98 Gew.-%, besonders bevorzugt zu ≥ 99 Gew.-%, bezogen auf das Gesamtgewicht der Polymerschicht (S1) ein Polymer (P1) ausgewählt aus der Gruppe bestehend aus einem Polycarbonat, einem Co-Polycarbonat oder Mischungen hiervon aufweist, das eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h), aufweist;
(S2) wenigstens eine weitere Polymerschicht (S2), die eine Vicat-Erweichungstemperatur < 149°C, bevorzugt ≤ 140°C, mehr bevorzugt ≤ 130°C bestimmt gemäß ISO 306 (50N; 50°/h) aufweist, bevorzugt in einem Bereich von 120 bis 148 °C;
(S3) optional wenigstens eine dritte Polymerschicht (S3), die eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h) aufweist.

2. Der Mehrschichtaufbau (MA) nach Anspruch 1, wobei die Polymerschicht (S2) mindestens ein Polymer (P2) enthält, ausgewählt aus der Gruppe bestehend aus einem Polycarbonat, einer Mischung oder einem Blend aus einem Polycarbonat und einem Co-Polyester oder Mischungen aus mindestens zwei hiervon.

3. Der Mehrschichtaufbau (MA) nach einem der vorhergehenden Ansprüche, wobei die Polymerschicht (S3) mindestens ein Polymer (P3) enthält, ausgewählt aus der Gruppe bestehend aus einem Polycarbonat, einem Co-Polycarbonate und Mischungen aus mindestens zwei hiervon.

4. Der Mehrschichtaufbau (MA) nach einem der vorhergehenden Ansprüche, wobei das Polymer (P1) oder das Polymer (P3) ein Polycarbonat oder Co-Polycarbonat der Formel (Ia), (1-2), (1-3) oder (1-4) ist, wobei (Ia) 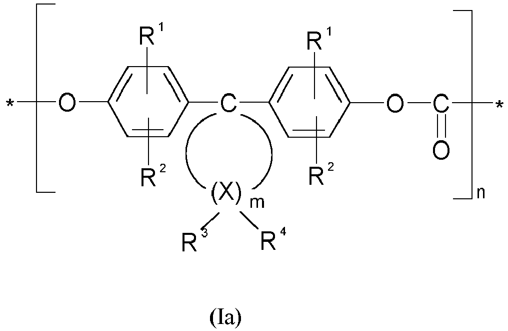 worin
R¹ und R² unabhängig voneinander Wasserstoff, Halogen, bevorzugt Chlor oder Brom, C₁-Cs-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten, oder 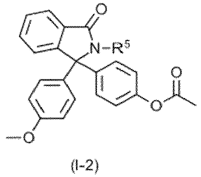 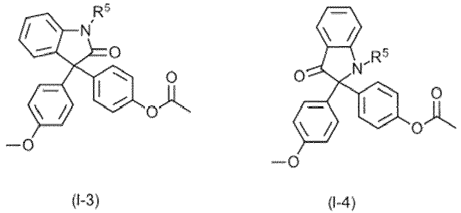 worin R⁵ für einen C₁- bis C₄-Alkylrest, Aralkylrest oder Arylrest, bevorzugt für einen Methylrest oder Phenylrest, ganz besonders bevorzugt für einen Methylrest, steht;

5. Der Mehrschichtaufbau (MA) nach Anspruch 4, wobei das Polycarbonat oder das Co-Polycarbonat teilweise aus den Ausgangsprodukten hergestellt ist, ausgewählt aus der Gruppe bestehend aus: 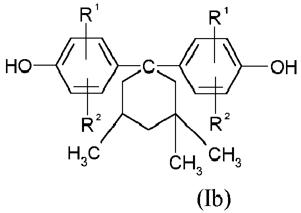 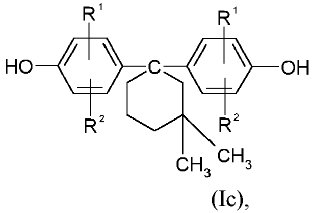 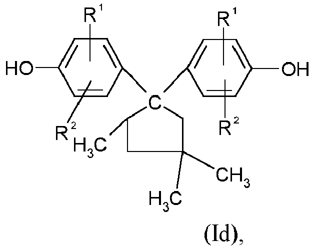 oder Mischungen aus mindestens zwei hiervon.

6. Der Mehrschichtaufbau (MA) nach einem der vorhergehenden Ansprüche, wobei das Polycarbonat oder das Co-Polycarbonat die Ausgangsverbindung (Ib) in einem Bereich von 10 Gew.-% bis 90 Gew.-%, bezogen auf das Gesamtgewicht des Polycarbonats oder des Co-Polycarbonats beinhaltet oder das Polycarbonat oder das Co-Polycarbonat ein molares Verhältnis von (Ib) zu anderen Bisphenol A Abkömmlingen in einem Bereich von 1:10 bis 10:1, bevorzugt in einem Bereich von 1:5 bis 5:1 aufweist.

7. Der Mehrschichtaufbau (MA) nach einem der vorhergehenden Ansprüche, wobei der komplette Mehrschichtaufbau (MA) oder eine der Polymerschichten (S1) oder (S3) mindestens eine, bevorzugt mindestens zwei, besonders bevorzugt alle der folgenden Eigenschaften aufweist:
(A) eine Dicke in einem Bereich von 30 bis 500 µm, bevorzugt in einem Bereich von 40 bis 400 µm, besonders bevorzugt in einem Bereich von 45 bis 200 µm, ganz besonders bevorzugt in einem Bereich von 50 bis 100 µm [APEC 10, PC 40].
(B) eine vertikale Abweichung der Dicke des Mehrschichtaufbaus (MA) in einem Bereich von ≥ 0,002 bis ≤ 0,020 mm, weiter bevorzugt in einem Bereich von ≥ 0,003 bis ≤ 0,015 mm, am meisten bevorzugt in einem Bereich von ≥ 0,005 bis ≤ 0,01 mm über die gesamte Fläche des Mehrschichtaufbaus (MA);
(C) eine Schichtdickentoleranz von 4 bis 20%, weiter bevorzugt von 5 bis 15%, besonders bevorzugt von 6 bis 10%, bezogen auf die mittlere Schichtdicke eines 500 mm ^{∗} 600 mm großen Schichtaufbaus oder Polymerschicht (S1) oder (S3);
(D) eine Hitzebeständigkeit bis zu einer Temperatur von 350°C, mehr bevorzugt bis zu 380°C;
(E) eine Transparenz in einem Bereich von 20 bis 98%, bevorzugt von 50 bis 95%, besonders bevorzugt von 60 bis 90%, gemessen gemäß ISO 13468-2:2006-07;

8. Ein Verfahren zur Herstellung eines Mehrschichtaufbaus (MA) mit einer ersten Außenseite (AS 1) und einer der Außenseite (AS1) gegenüberliegenden zweiten Außenseite (AS2), umfassend die Schritte
i) Bereitstellen mindestens einer ersten Polymerschicht (S1),
ii) Bereitstellen mindestens einer weiteren Polymerschicht (S2);
iii) Optional Bereitstellen mindestens einer dritten Polymerschicht (S3);
iv) Bilden eines Laminats aus jeweils einer separaten Polymerschicht (S1), (S2) und optional (S3) bei einer Temperatur (T1) von mindestens 150°C, bevorzugt mindestens 180°C, mehr bevorzugt mindestens 200°C und maximal 300°C;
wobei mindestens ein der Außenseiten (AS1) oder (AS2) durch eine der Polymerschichten (S1) oder (S3) gebildet werden, die jeweils ein Polymer (P1) oder (P2) beinhalten oder daraus bestehen, die jeweils eine Vicat-Erweichungstemperatur ≥ 149°C, bevorzugt ≥ 160°C, weiter bevorzugt ≥ 170°C; mehr bevorzugt ≥ 180°C, bestimmt gemäß ISO 306 (50N; 50°/h), aufweisen.

9. Das Verfahren nach Anspruch 8, wobei der Wärmeeintrag in die jeweilige Polymerschicht (S1), (S2) oder (S3) in Schritt iv) ≥ 50 J/s^{∗}m², bevorzugt ≥ 60 J/s^{∗}m², besonders bevorzugt ≥ 80 J/s^{∗}m² beträgt.

10. Das Verfahren nach einem der Ansprüche 8 oder 9, wobei der Eintrag der Wärme auf die jeweilige Polymerschicht( S1), (S2) oder (S3) in Schritt iv) zur Erreichung der Temperatur (T1) ausgehend von 23°C innerhalb von ≤ 15 Sekunden, bevorzugt von ≤ 10 Sekunden, mehr bevorzugt von ≤ 5 Sekunden erfolgt.

11. Das Verfahren nach einem der Ansprüche 8 bis 10, wobei die Polymerschicht (S1) oder die Polymerschicht (S5) mindestens ein Polymer (P1) oder (P3) ausgewählt aus der Gruppe bestehend aus einem Polycarbonat, einem Co-Polycarbonaten oder einer Mischung von mindestens zwei hiervon beinhaltet.

12. Das Verfahren nach einem der Ansprüche 8 bis 11, wobei die Polymerschicht (S2) mindestens ein Polymer (P2) enthält, ausgewählt aus der Gruppe bestehend aus einem Polycarbonat, eine Mischung oder einem Blend aus einem Polycarbonat und einem Co-Polyester oder einer Mischung aus mindestens zwei hiervon.

13. Ein Laminat, insbesondere ein Sicherheitsdokument, enthaltend einen Mehrschichtaufbau gemäß einem der Ansprüche 1 bis 7 oder erhältlich nach dem Verfahren nach einem der Ansprüche 8 bis 12.

14. Eine Verwendung eines Mehrschichtaufbaus (MA) gemäß einem der Ansprüche 1 bis 7 oder hergestellt gemäß einem der Ansprüche 8 bis 12 für eine Oberflächenbehandlung, insbesondere einer Lamination, die zumindest auf einer Seite des zu laminierenden Mehrschichtaufbaus (MA) bei einer Temperaturen (T1) in einem Bereich von ≥ 160°C bis ≤ 250°C, bevorzugt in einem Bereich ≥ 170°C bis ≤ 240°C; mehr bevorzugt in einem Bereich von ≥ 180°C bis ≤ 230°C, besonders bevorzugt in einem Bereich von ≥ 185°C bis ≤ 220°C, ganz besonders bevorzugt in einem Bereich von ≥ 190°C bis ≤ 210°C.

15. Die Verwendung gemäß Anspruch 14 zur Herstellung eines Sicherheitsdokuments, bevorzugt eines Identifikationsdokuments.
